# EUROPÄISCHE PATENTANMELDUNG

(11) **EP 0 693 644 A1**
(43) Veröffentlichungstag der Anmeldung: **24.01.1996**
(21) Anmeldenummer: 95108270.0
(22) Anmeldetag: 31.05.1995
(51) Int. Cl.: F16J 15/08

(54) **Metallische Zylinderkopfdichtung**

(30) Priorität: 20.07.1994 DE 4425669
(71) Anmelder: GOETZE Payen GmbH, D-57562 Herdorf (DE)
(72) Erfinder: Lönne, Klaus - Dipl.-Ing., D-51399 Burscheid (DE); Papendorf, Jörg - Dipl.-Ing., D-51519 Odenthal-Glöbusch (DE)

(57) **Zusammenfassung**

Die Erfindung betrifft eine metallische Zylinderkopfdichtung (1) mit einer Graphiteinlage (8) im Bereich zwischen den Durchgangsöffnungen (7), um in diesem Bereich die Anpassung der Zylinderkopfdichtung (1) an die Oberflächentopographie des Motors zu verbessern.

## Beschreibung

Die Erfindung betrifft eine metallische Zylinderkopfdichtung für Reihenmotoren, umfassend mehrere übereinander angeordnete Metallblechplatten und Durchgangsöffnungen für Brennräume und mindestens eine die Durchgangsöffnungen umgebende Sicke, wobei im Randbereich der Durchgangsöffnungen eine Graphiteinlage vorgesehen ist.

Gestiegene Anforderungen an den Dichtbereich zwischen Motorblock und Zylinderkopf führte zu einem Dichtungskonzept, bestehend im wesentlichen aus mehreren verschiedenen Stahlblechen, die teils gesickt oder gefalzt ausgeführt sind. Die konstruktive Auslegung der Metalldichtung richtet sich nach den motorspezifischen Anforderungen. Insbesondere bei mehrlagigen Zylinderkopfdichtungen kommt es im Stegbereich, d.h. im Bereich zwischen benachbarter Brennraumöffnungen, zu einer ungenügenden Anpassung der Zylinderkopfdichtung an die Oberflächentopographie des Motors. Die dadurch zu geringe Pressung in diesem Bereich führt leicht zu Gasleckagen zwischen den Zylindern. Um dieses Problem in den Griff zu bekommen, wurde bereits gemäß US-PS 5 294 134 vorgeschlagen, im Randbereich der Durchgangsöffnungen jeweils eine dünne Graphiteinlage anzuordnen, um die Flächenpressung in diesem Bereich zu erhöhen. Der Nachteil dieser Konstruktion ist zum einen darin zu sehen, daß die Graphiteinlage lediglich im Randbereich angeordnet ist, so daß die Dichtung im Bereich der Sicke eine sprunghafte Flächenpressung aufweist, zum anderen ist der Einbau der Graphiteinlagen gemäß US-Patentschrift schwierig, da die Einlagen äußerst klein in der geometrischen Abmessung ausgelegt sind.

Der Erfindung liegt die Aufgabe zugrunde, eine gattungsgemäße Zylinderkopfdichtung im Stegbereich im Hinblick auf die Abdichtwirkung zu verbessern.

Diese Aufgabe wird erfindungsgemäß dadurch gelöst, daß die Graphiteinlage durchgehend von einem Randbereich zum benachbarten Randbereich der Durchgangsöffnungen verläuft und die Graphiteinlage zwischen zwei Metallblechplatten gehalten ist.

Auf diese Weise erstreckt sich die Graphiteinlage über den gesamten Stegbereich, wodurch auch im Bereich der Sicke eine gute Anpassungsfähigkeit und eine gute Temperaturbeständigkeit gegeben ist.

Überdies läßt sich die Graphiteinlage besser als bisher in die Dichtung einbauen, da sie aufgrund ihrer geometrischen Abmessung leichter handhabbar ist.

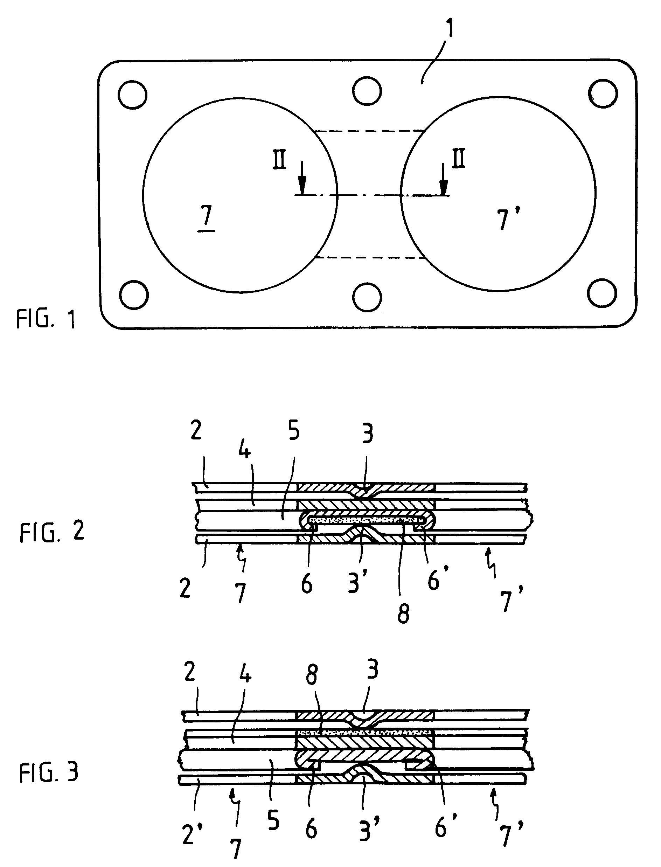

Vorteilhafte Ausgestaltungen der Erfindung sind in den Unteransprüchen dokumentiert. Die Erfindung ist anhand eines Ausführungsbeispieles in der Zeichnung dargestellt und wird im folgenden näher erläutert. Es zeigen:
Figur 1 eine Draufsicht auf eine Zylinderkopfdichtung
Figur 2 einen Schnitt nach der Linie II - II der Figur 1
Figur 3 eine alternative Ausbildung gemäß Figur 2
Die in der Figur 1 dargestellte Zylinderkopfdichtung (1) besteht aus mehreren übereinander angeordneten Blechplatten. Die außenliegenden Blechplatten (2, 2') - Figur 2 - dienen als Deckbleche und weisen eine Sicke (3, 3') auf. Die Sicken (3, 3') sorgen für die erforderliche Linienpressung und weisen ein hohes Rückfederungsvermögen auf. Zwischen den Deckblechen (2, 2') können eine oder mehrere Blechplatten angeordnet sein.

In der Figur 2 ist eine Distanzplatte (4) zur Erzielung der erforderlichen Einbaudicke unterhalb des Deckbleches (2) angeordnet. Darunter erstreckt sich eine Platte (5) mit gefalteten Randbereichen (6, 6'). Durch die Randbereiche (6, 6') ist eine Dickenerhöhung geschaffen, die es ermöglicht, die Dichtpressung in den Durchgangsöffnungen (7), d.h. im Brennraum, zu erhöhen. Erfindungsgemäß erstreckt sich eine Graphiteinlage (8) durchgehend zwischen den Durchgangsöffnungen (7) beziehungsweise Brennraumöffnungen von einem Randbereich (6) zum anderen Randbereich (6') der Platte 5, so daß die Sicke (3') sich auf der Graphiteinlage (8) abstützt.

Alternativ kann die Graphiteinlage (8) auch auf der Distanzplatte (4) festgeklebt sein, gemäß Figur 3. Hierdurch ist die Sicke (3) in dichter Verbindung mit der Graphiteinlage (8). Unterschiedliche Dichten für die Graphiteinlagen (8) sind denkbar, um die Verspannung des Zylinderkopfes lokal zu erhöhen. Graphit ist sehr anpassungsfähig und ausreichend temperaturbeständig.

## Patentansprüche

1. Metallische Zylinderkopfdichtung für Reihenmotoren, umfassend mehrere übereinander angeordnete Metallblechplatten und Durchgangsöffnungen für Brennräume und mindestens eine die Durchgangsöffnungen umgebende Sicke, wobei im Randbereich der Durchgangsöffnungen eine Graphiteinlage vorgesehen ist, dadurch gekennzeichnet, daß die Graphiteinlage (8) durchgehend von einem Randbereich (6) zum benachbarten Randbereich (6') der Durchgangsöffnungen (7) verläuft, und die Graphiteinlage (8) zwischen zwei Metallblechplatten (2, 2') gehalten ist.

2. Metallische Zylinderkopfdichtung nach Anspruch 1, dadurch gekennzeichnet, daß die Graphiteinlage (8) durch Umfalten der Ränder einer Metallblechplatte (5) gehalten ist.

3. Metallische Zylinderkopfdichtung nach Anspruch 1, dadurch gekennzeichnet, daß die Graphiteinlage (8) durch Kleben mit einer Metallblechplatte (4) verbunden ist.
